# EUROPEAN PATENT APPLICATION

(11) **EP 3 699 543 A1**
(43) Date of publication of application: **26.08.2020**
(21) Application number: 20157865.5
(22) Date of filing: 18.02.2020
(51) Int. Cl.: F41H 5/04, F41J 5/04

(54) **IMPACT DETECTION SYSTEM**

(30) Priority: 19.02.2019 IL 26490019
(71) Applicant: Plasan Sasa Ltd., 1387000 M.P. Marom Hagalil (IL)
(72) Inventor: SHOSHAN, Amir Ben, 1238700 D.N. Chevel Korazim (IL); ENGEL, Asaf, 1387000 M.P. Marom Hagalil (IL)
(74) Representative: Zacco GmbH

(57) **Abstract**

The presently disclosed subject matter concerns an impact detection system for detecting an event of impact of a threat on a target and determining at least one characteristic of the event. The system comprises a sensing array of sensing elements mountable to the target. Each sensing element being configured to change its state from an intact state to a damaged state upon impact of the threat. The system further comprises a measuring system operatively coupled to the sensing elements, and a processing system operatively coupled to the measuring system. The processing system being configured to identify changes in the state of the sensing elements, and upon identifying the changes of the states of at least two sensing elements during the event of impact, generate a data signal including a time-sequence of the corresponding changes, and to determine said at least one characteristic of the event of the impact accordingly.

## Description

This application claims priority from Israel application IL264900 dated 19 February 2019, the content of which is incorporated herein by reference.

### TECHNOLOGICAL FIELD

This invention relates to impact detection systems, and in particular, to a system and method for detecting an event of impact of a threat on a target, and determining at least one characteristic of the event.

### BACKGROUND

Impact detection systems, which alert upon a threat hit and supply data regarding impact location, threat type and general direction of threat arrival are known, and are mainly used in the military field, where they can be incorporated into various protection variants, ranging from individual body armor plates to full scale naval vessels.

For example, such detection systems can be incorporated into a battle management system of an APC (armored personnel carrier), to provide to a crew positioned within the APC useful data on events of impact occurring on the exterior of the APC.

Such detection systems can also be used in unmanned or autonomous vehicles such as cars, in spacecraft, or the like.

U.S. Pat. No. 9,772,818 discloses a damage detection and remediation system includes a sensing device for detecting damage events related to a structure of interest. Such damage events may include impact from a ballistic object, a tamper event, a physical impact, or other events that may affect structural integrity or cause failure. Illustratively, the sensing device is in communication with a measurement system to determine damage criteria, and a processing system which is configured to use the damage criteria to determine, for example, a direction of the initiation point of a ballistic object causing the damage event.

U.S. Pat. No. 10,096,175 discloses a method, system and computer program product for structural damage detection in a vehicle. The method includes detecting a change in tension of a wire coupled to two different nodes of a multiplicity of nodes tethered to one another by way of tensioned wires and affixed to a portion of a vehicle. Thereafter, in response to the detection, data is uploaded that includes the change in tension to a computer remote from the vehicle, over a computer communications network.

### GENERAL DESCRIPTION

According to one general aspect of the presently disclosed subject matter, there is provided an impact detection system for detecting an event of impact of a threat on a target and for determining at least one characteristic of the event.

According to an embodiment, the impact detection system comprises a sensing system which can sense and analyze the impact event in real-time. More particular, the impact detection system includes a sensing array of sensing elements mountable to the target. Each sensing element is configured to change its state from an intact state to a damaged state upon impact of the threat on the sensing element. The impact detection system also includes a measuring system operatively coupled to the sensing elements and being sensitive to their state. The measuring system is configured to generate state signals, each state signal indicative of the state of the corresponding sensing elements. The impact detection system further includes a processing system operatively coupled to the measuring system. The processing system is configured for receiving the state signals corresponding to all the sensing elements, and identifying changes for each state signal corresponding to the changes of the state of the corresponding sensing element from the intact state to the damaged state. Upon identifying the changes of the states of two or more sensing elements during the event of impact from the intact state to the damaged state, the processing system is configured to generate a data signal including a time-sequence of the corresponding changes of the state of said at least two sensing elements, and to process the data signal generated thereby in order to determine one or more desired characteristics of the event of the impact.

According to an embodiment, the desired characteristics of the event of impact are selected from at least a type of the threat and a direction of arrival of the threat with respect to the target.

According to an embodiment, the processing system is further configured to associate each state signal with the corresponding sensing element.

According to an embodiment, the impact detection system further comprises a user interface operatively coupled to the processing system and configured to provide the desired characteristic of the event of the impact to a user.

According to an embodiment, the processing system comprises a storage device configured for storing reference data including one or more reference time-sequences of changes of state of reference sensing elements. The reference time-sequence(s) can be related to an impact event having known characteristics.

According to an embodiment, the processing system further comprises a processor configured to compare the time-sequence of the corresponding changes of the state of the two or more sensing elements with the one or more reference time-sequences to determine the desired characteristic of the event of impact.

According to an embodiment, the processing system is further configured to determine a certainty at which the desired characteristic is determined.

According to an embodiment, the impact detection system is configured for detecting an event of impact of a kinetic projectile.

According to an embodiment, the impact detection system is configured for detecting an event of impact of a kinetic projectile having a caliber within a range extending from 4 mm to 12.7 mm.

According to an embodiment, the measuring system includes an electrical source, and each sensing element includes an electrically conductive wire configured to be connected to the electrical source of the measuring system.

According to an embodiment, the measuring system includes a plurality of electrical current sensors corresponding to the sensing elements; the electrical current sensors can be configured for measuring an electrical current passing across the conductive wires, and generate the state signal of the corresponding sensing element, corresponding to the state of the wire.

According to an embodiment, each sensing element includes a wire made of a piezoelectric material.

According to an embodiment, the sensing elements of the array are in a parallel arrangement with a predetermined distance from each other.

According to an embodiment, the predetermined distance between the sensing elements is smaller than a caliber of the threat, with respect to which the impact detection system is configured for detecting an event of impact.

According to an embodiment, the sensing array is configured to be mounted onto or to be incorporated in a target panel.

According to an embodiment, the target panel further comprises an anti-ricochet layer configured to absorb debris scattering as a result of the impact.

According to an embodiment, the sensing array is disposed on the anti-ricochet layer.

According to an embodiment, the sensing array is embedded within the anti-ricochet layer.

According to an embodiment, the anti-ricochet layer is made of non-conductive material.

According to an embodiment, the anti-ricochet layer material is selected from epoxy, thermo-plastic, thermal set plastic, ceramic, silicon, or polymers.

According to an embodiment, the target panel further comprises an armor plate configured to protect the target from the threat, and wherein the anti-ricochet layer is disposed at least partially between the armor plate and the sensing array.

According to an embodiment, the impact detection system further comprises one or more additional arrays of sensing elements mountable onto the target at a different location than the sensing array.

According to an embodiment, the processing system is further configured to associate the data signal with the corresponding sensing array to determine the location of the impact with respect to the target.

According to another general aspect of the presently disclosed subject matter, there is provided a target panel comprising a sensing array having any of the features of the sensing array described above, and optionally further comprising at least one of the armor plate and the anti-ricochet layer.

According to an embodiment, the target panel further includes a measuring system having any of the features of the measuring system described above.
According to an embodiment, the impact detection system further includes one or more auxiliary sensors mountable on the target at a predetermined location. The auxiliary sensors can be configured to sense an auxiliary parameter reflective of an event of impact, and generate auxiliary signals indicative of a value of said parameter.
According to an embodiment, the processing system is configured to receive the auxiliary signals, and to identify changes in value of the auxiliary parameter corresponding to the event of impact in order to determine occurrence thereof.
According to an embodiment, the processing system is further configured to associate the auxiliary signals with the corresponding auxiliary sensor to determine the location of the impact with respect to the target.
According to an embodiment, the auxiliary sensor includes an accelerometer configured to measure acceleration and generate acceleration signals, constituting the auxiliary signals.

According to a still other general aspect of the presently disclosed subject matter, there is provided an impact detection method for detecting an event of impact of a threat on a target and for determining at least one characteristic of the event.

According to an embodiment, the method includes providing a sensing array of sensing elements on the target. Each sensing element is configured to change its state from an intact state to a damaged state upon impact of the threat on the sensing element.

The method further includes sensing the state of each sensing element, and generating state signals. Each state signal is indicative of the state of the corresponding sensing elements. The method also includes identifying changes for each state signal that correspond to the change of the state of the corresponding sensing element from the intact state to the damaged state. Upon identifying the changes of the states of two or more sensing elements during the event of impact from the intact state to the damaged state, a data signal including a time-sequence of the corresponding changes of the state of the two or more sensing elements, is generated. The method further includes processing the data signal generated thereby to determine the at least one characteristic of the event of the impact.

According to an embodiment, the desired characteristics of the event of impact are selected from at least a type of the threat, and a direction of arrival of the threat with respect to the target.

According to an embodiment, the processing further includes associating each state signal with the corresponding sensing element.

According to an embodiment, the processing further includes comparing the time-sequence of the corresponding changes of the state of the two or more sensing elements with one or more reference time-sequences to determine said at least one characteristic of the event of impact.

According to an embodiment, the processing further includes determining a certainty at which the desired characteristic is determined.

According to an embodiment, the impact detection method further comprises a step of providing an additional array of sensing elements mountable to the target on a different location than the sensing array.

According to an embodiment, the processing further includes associating the data signal with the corresponding sensing array to determine the location of the impact with respect to the target.

According to an embodiment, the impact detection method further includes providing at least one auxiliary sensor mountable on the target at a predetermined location, configured to measure a value of an auxiliary parameter which is reflective of an event of impact.

According to an embodiment, the impact detection method further includes sensing the value of the auxiliary parameter; generating auxiliary signals indicative of the value of the auxiliary parameter; and identifying changes in the value of the auxiliary parameter corresponding to the event of impact to determine an occurrence thereof. According to an embodiment, the processing further includes associating the auxiliary signals with the corresponding auxiliary sensor to determine the location of the impact with respect to the target.

According to a still other general aspect of the presently disclosed subject matter, there is provided a target panel, mountable to the target and configured for use with an impact detection system for detecting an event of impact of a threat and determining at least one characteristic of the event of impact.

According to an embodiment the target panel includes a sensing array of sensing elements mountable to the armor plate, each sensing element configured to change its state from an intact state to a damaged state upon impact of the threat on the sensing element.

According to an embodiment the target panel further includes a measuring system operatively coupled to the sensing elements and being sensitive to their state, the measuring system configured to generate state signals, each state signal indicative of the state of the corresponding sensing elements.

According to an embodiment these state signals are configured to be processed by a processing system for determining the at least one characteristic of the event of impact.

According to an embodiment, the target panel further includes an armor plate configured to protect the target from the threat.

According to an embodiment, the target panel further includes one or more anti-ricochet layers configured to absorb debris scattering as a result of the impact.

According to an embodiment, the anti-ricochet layer is at least partially disposed between the sensing array and the armor plate.

According to an embodiment, the one or more anti-ricochet layers are two anti-ricochet layers, sandwiching therebetween the sensing array.

Additional details and advantages of the presently disclosed subject matter will be set forth in the detailed description and/or appreciated therefrom.

### BRIEF DESCRIPTION OF THE DRAWINGS

In order to better understand the subject matter that is disclosed herein and to exemplify how it may be carried out in practice, embodiments will now be described, by way of non-limiting examples only, with reference to the accompanying drawings, in which:
**Fig. 1** is a block diagram of an illustrative impact detection system, according to one embodiment of the present disclosure;
**Fig. 2A** is a schematic perspective view of an event of impact of a threat on a sensing array mounted on a target;
**Fig. 2B** is a schematic top view of the event of impact of **Fig. 2A**;
**Fig. 3** schematically illustrates an impact detection system with a sensing array as seen in a front view, according to another embodiment of the present disclosure;
**Figs. 4A to 4C** illustrate time intervals of an event of impact as it is sensed by a sensing array which is shown in these figures as seen in front view, according to a further embodiment of the present disclosure;
**Fig. 5A** is a schematic perspective view of a target panel, according to an embodiment of the present disclosure;
**Fig. 5B** is a schematic perspective view of a target panel, according to still another embodiment of the present disclosure, where a sensing array is sandwiched between two anti-ricochet layers, where one of which is partially shown;
**Fig. 6** schematically illustrates an impact detection system with a sensing array as seen in a front view, according to a further embodiment of the present disclosure;
**Fig. 7** is a schematic perspective view of a target with two illustrative sensing arrays mounted thereon, according to a further embodiment of the present disclosure;
**Fig. 8** is a schematic block diagram of an impact detection system according to further embodiment of the present disclosure; and
**Fig. 9** is a schematic perspective view of a target, on which two illustrative target panels and two illustrative accelerometers are mounted, according to a further embodiment of the present disclosure.

### DETAILED DESCRIPTION OF EMBODIMENTS

The principles and operation of an impact detection system including an impact detection method, according to the present disclosure, may be better understood with reference to the drawings and the accompanying description.

It should be understood that these drawings are shown for illustrative purposes only and are not meant to be limiting. It should also be noted that the figures illustrating various examples of the system of the present invention are not to scale, and are not in proportion, for purposes of clarity. It should be noted that the blocks, as well other elements in these figures, are intended as functional entities only, such that the functional relationships between the entities are shown, rather than any physical connections and/or physical relationships. The same reference numerals and alphabetic characters are utilized for identifying those components which are common in the impact detection system, shown in the drawings throughout the present description of the invention. Examples of constructions are provided for selected elements. Those versed in the art should appreciate that many of the examples provided have suitable alternatives which may be utilized.

Some portions of the detailed descriptions, which follow hereinbelow, are presented in terms of algorithms and/or symbolic representations of operations on data represented as physical quantities within registers and memories of a computer system. An algorithm is here conceived to be a sequence of steps requiring physical manipulations of physical quantities and leading to a desired result. Usually, although not necessarily, these quantities take the form of electrical or magnetic signals capable of being stored, transferred, combined, compared, and otherwise manipulated. In the present description, these signals can be referred to as values, elements, symbols, terms, numbers, or the like.

Unless specifically stated otherwise, throughout the description, utilizing terms such as "computing" or "calculating" or "determining" or "obtaining" or the like, refer to the action and processes of a computer system, or similar electronic processing device, that manipulates and transforms data.

The description as follows hereinbelow refers to detecting events of impact of a threat on a target. The term "target" is broadly used in the present description and claims to describe any object, such as protective equipment for personnel, armor, vehicles, microelectronics, spacecraft, aircraft, or any other structure, device or unit where impact detection is desired.

The term "threat" is broadly used in the present description and claims to describe any object external to the target, which can affect structural integrity of the target in an event of collision (impact) therebetween. The threat can be ballistic or self-propelled, can be kinetic, or have a warhead. Examples of a threat include, but are not limited to, a projectile of a ranged weapon, a rocket, a missile, a rock, debris from a nearby impact event, etc. For example, the threat can be a kinetic projectile having a 0.5 inch (12.7mm) caliber, however other types of threats can also be contemplated.

The phrase "configured for detecting an event of impact of a threat on a target" applicable to a system/device means that, when the system/device is designed, its features and parameters are to be selected in accordance with a pre-determined type of the threat and its expected impacts on a target.

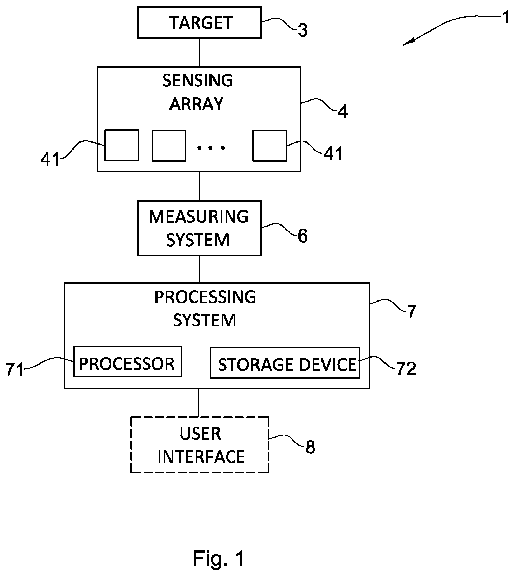

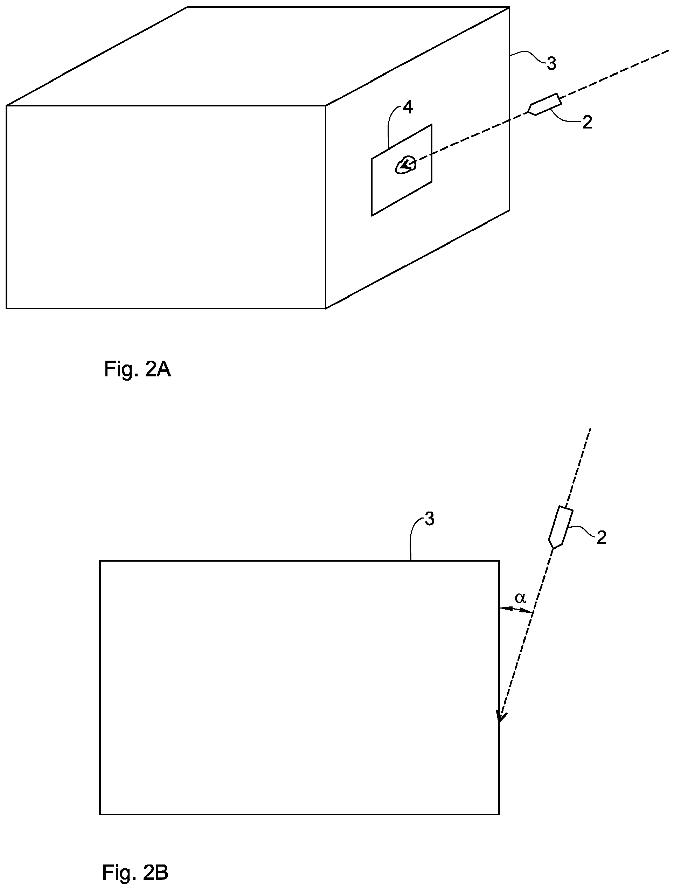

Referring to **Fig. 1****,** a schematic block diagram of an impact detection system **1** is illustrated, according to an embodiment of the presently disclosed subject matter. The impact detection system **1** is configured for detecting an event of impact of a threat **2** on a target **3,** and determining one or more characteristics of the event. An event of impact of the threat **2** on the target **3** is shown in **Figs. 2A** and **2B****.**

The characteristic of the event of impact can be selected from a type of the threat **2** and a direction of arrival of the threat with respect to the target, as will be explained hereinafter. The characteristics can also include a location of the impact with respect to the target, as also will be explained hereinafter.

The system **1** can comprise a sensing array **4** including a plurality of sensing elements **41.** The sensing array **4** can be mounted on the target **3** at areas of the target **3** where impacts may occur from incoming threats. Each sensing element **41** of the sensing array **4** is configured to change its state from an intact state to a damaged state upon impact of the threat **2** thereon.

The impact detection system **1** also includes a measuring system **6** operatively coupled to each sensing element **41.** The measuring system **6** is sensitive to the state of each sensing element and is configured to generate state signals indicative of the state of the corresponding sensing element.

The impact detection system **1** also includes a processing system **7** operatively coupled to the measuring system **6.** The processing system **7** is configured for processing the state signals, and determining the desired characteristic of the impact event, as will be explained hereinafter. The processing system **7** can for example be in the form of specially designed hardware, the hardware being configured for execution of software thereon that enables the hardware to perform specific functions described hereinafter. The software can be stored on a computer readable medium such as a storage device **72** that can be accessed by a processor **71** of the processing system **7.**

According to an embodiment of the present disclosure, the impact detection system **1** can include a user interface **8.** The user interface **8** can be operatively coupled to the processing system **7** to present the desired characteristic(s) to a user of the system **1,** in a user friendly format.

For example, when the system **1** is used on a vehicle, such as an armored personnel carrier (APC), the sensing array **4** can be mounted on an external side of the APC, whilst the user interface **8** can be located in an interior of the APC. In this case the user interface **8** can present the desired characteristic(s) of the event of impact to a crew located within the APC for example by vocal or visual presentation, e.g. on a combat management system of the APC.

According to an embodiment of the presently disclosed subject matter the sensing array **4** can be mounted on an armor plate of the APC, optionally together with the measuring system **6.**

The system **1** can be used also on other types of vehicles such as on a truck, on a boat, on a helicopter, or any other vehicle exposed to incoming impacts.

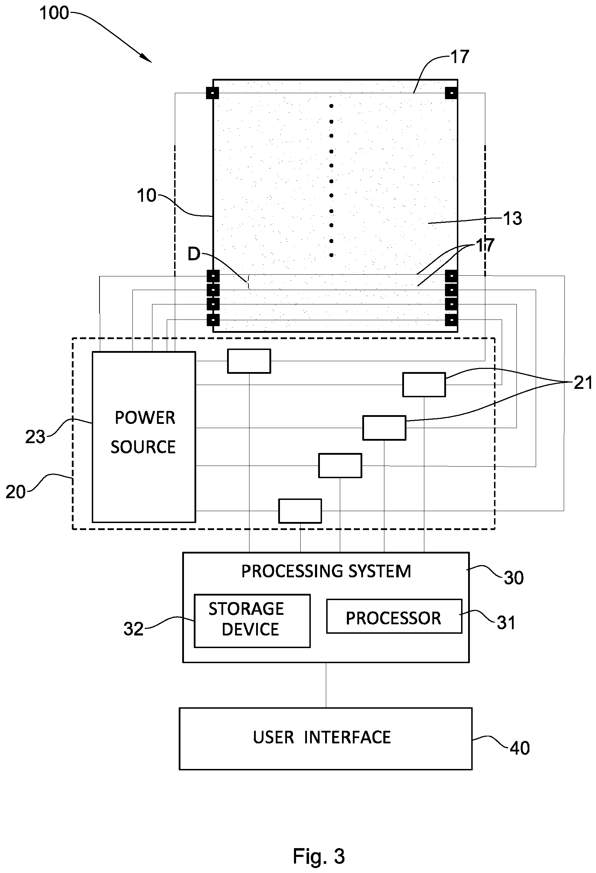

Referring to Fig. **3****,** a schematic view of an impact detection system **100** is illustrated, in accordance with an embodiment of the present disclosure.

The impact detection system **100** is configured to detect in real-time incoming threats impacting the target (**3** in **Fig. 2A** and **2B**)**.** The impact detection system **100** includes a sensing array **10,** a measuring system **20,** a processing system **30,** and a user interface **40.**

According to this embodiment, the sensing array **10** includes a plurality of sensing elements in the form of electrically conductive wires **17** arranged in parallel on or within a nonconductive substrate **13,** with a predetermined distance D therebetween.

It should be appreciated that the sensing array **10** can be adapted to certain types of threats, for example by adapting the distance **D** to be smaller than a caliber of the smallest expected threat indicated by a user, e.g. as most relevant to the area of operation of the target. The distance **D** can be adapted such that in every event of impact, at least two conductive wires **17** encounter an impact.

For example, when the smallest expected threat is a 0.5 inch (12.7mm) caliber projectile, the conductive wires **17** can be disposed at distances **D** from each other smaller than 0.5 inch.

The measuring system **20** includes an electrical power source **23** and a plurality of electrical current sensors **21.** As shown in Fig. **3****,** each of the wires **17** is electrically coupled to the measuring system **20,** for reading/monitoring thereof.

Specifically, each of the electrical current sensors **21** is coupled to one end of the corresponding conductive wire **17** and to the electrical power source **23,** which in turn is connected to the other end of the conductive wire **17,** thereby forming an electrically conductive path. Each electrical current sensor **21** is configured to measure electrical current passing across the respective conductive wire **17** and to transmit the results of its measurements to a processor **31** of a processing system **30,** in the form of a state signal.

For example, when the target is a vehicle, the electrical power source **23** can be powered by a battery of the vehicle.

It can be appreciated that when one of the wires **17** encounters an impact of a projectile, the wire(s) is (are) cut, thereby interrupting the electrical current passing thereacross. Accordingly, the state of the corresponding sensing element(s) **17,** i.e. the corresponding conductive wire(s) **17,** changes from the intact state to the damaged state.

This interruption of the electrical current across each of the impacted wires **17** is reflected in the state signal transmitted from the corresponding electrical current sensor **21** to the processor **31.** The processor **31** is configured to receive the state signals from the electrical current sensors **21** and identify these interruptions for each state signal. When the processor **31** identifies a first change in a state signal indicating that a wire **11** has been cut, the processor **31** interprets it as an initiation of an event of impact and starts to count time, or a time related parameter.

If within a predetermined timeframe the processor **31** identifies changes in other state signals, indicating that more wires have been cut, the processing system generates a data signal including a time-sequence of the corresponding changes. For example, when the threat is a 0.5 inch projectile, this timeframe can be in the range of a few milliseconds.

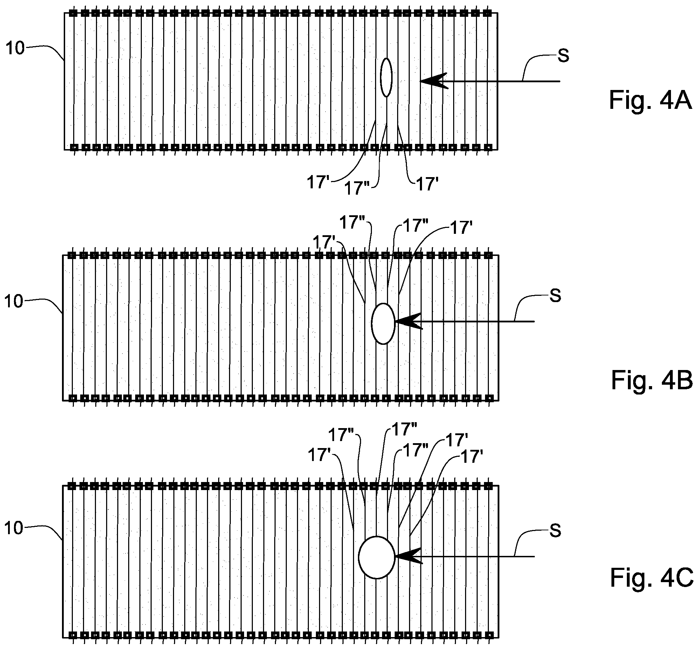

An exemplary illustration of an event of impact of the threat on the sensing array **10** is shown in Figs. **4A** to **4C****,** depicting the event of impact in terms of time sequence, where the conductive wires **17** are designated by reference numeral **17'** when the conductive wires **17** are intact, and by reference numeral **17"** when the conductive wires **17** are cut (damaged).

Referring to **Figs. 2****,** **3** and **4A** to **4C,** the threat **2** arrives at a certain angle with respect to the sensing array **10,** from a direction **S.** During the impact, the threat cuts a series of conductive wires **17"** in its path, interrupting the electrical current passing thereacross.

Initially, the threat impacts the first wire **17"** seen in Fig. **4A****,** and causes interruption of the electrical current passing thereacross. This interruption is captured by the respective electrical current sensor **21** coupled to the corresponding wire **17",** which in turn updates the state signal transmitted to the processor **31.**

The processor **31** identifies this change in the state signal as a first change and starts a time count which opens the predetermined timeframe.

From this moment and on, with every following change in a state signal associated with the impact of the threat thereon, indicating that a respective further wire **17"** has been cut (Figs. **4B** and **4C**), the time at which the corresponding cut is identified by the processor 31 is registered and added to a time-sequence characterizing the event of impact, until the pre-determined timeframe closes.

According to another embodiment of the presently disclosed subject matter, the time count starts upon switching the impact detection system **1** on. In this case, the processor **31** is configured to open the predetermined time frame upon identifying a first change in a state signal, and register time intervals between the first change and all further changes in state signals within the predetermined timeframe, and add these time-intervals to a time-sequence characterizing the event of impact, until the pre-determined timeframe closes.

After the predetermined timeframe closes, the processor **31** generates a data signal including this time-sequence characterizing the event of impact, to be later processed thereby to determine the desired characteristics, as will be explained hereinafter.

The processing system **30** can further include a storage device **32** configured for storing reference data including a reference time-sequences bank containing at least one reference time-sequence of changes of state of reference sensing elements, related to a reference impact event which already occurred in a preliminary calibration process, the reference impact event having known characteristics.

The processor **31** can be further configured to compare the time-sequence of the event of impact with the reference time-sequences stored within the reference time-sequences bank utilizing known mathematical models therefor. By this comparison, the processor **31** can identify the reference time-sequence stored in the reference time-sequences bank which is most correlated with the obtained time-sequence characterizing the event of impact, and assign the same known characteristics of this reference time-sequence to the currently occurring impact event.

The correlation between the identified reference time-sequence and the obtained time-sequence can be provided to a user via the user interface **40** in terms of certainty in the determination of the desired characteristics. This certainty in the determination of the desired characteristics can be in a range of 0% to 100%.

As mentioned, the preparation of the reference time-sequences bank can be carried out in the preliminary calibration process. This calibration process can include performing a series of initiated reference impacts by relevant threats on reference sensing arrays identical to the sensing array **10.** Each of the reference sensing arrays can be connected to the system **1** during the impact for obtaining the reference time-sequence characterizing the event of impact, as described above. These reference time-sequences are then stored in the reference time-sequences bank of the storage device **32** along with data including the known characteristics associated with the corresponding reference event of impact.

These known characteristics can, for example, include the type of the relevant threat used in the reference event of impact and the direction of arrival of this threat with respect to the reference sensing array which has encountered an impact. For example, this direction can be defined in terms of an impact angle between a trajectory of the threat at the immediate proximity to the sensing array and a surface of the sensing array at the area where it has encountered an impact. This angle is designated as α in Fig. **2B****.**

In a case where the direction is determined in terms of the impact angle, two events of impact of the same threat arriving from opposite directions, e.g., from a left side and from a right side of the sensing array **10,** may appear identical in terms of their obtained time sequences. To avoid misinterpretation of the direction of arrival of the threat, the processor **31** can be further configured to associate each state signal with the corresponding conductive wire **17,** and thereby to determine the direction of advancement of the threat **3** on the sensing array **10,** e.g. from left to right, or from right to left.

In the above case, in the calibration process, the series of initiated impacts can include performing reference shooting at the sensing array at least once from a first direction and once from a second direction which is diverted by 90 degrees to the first direction.

The comparing performed by the processor **31** at an event of impact can include performing one or more mathematical interpolations between the reference time-sequences obtained from these shootings, until obtaining a time-sequence which correlates with the time-sequence corresponding to the current event of impact, up to a certain degree, in order to evaluate the desired characteristics of the current event of impact.

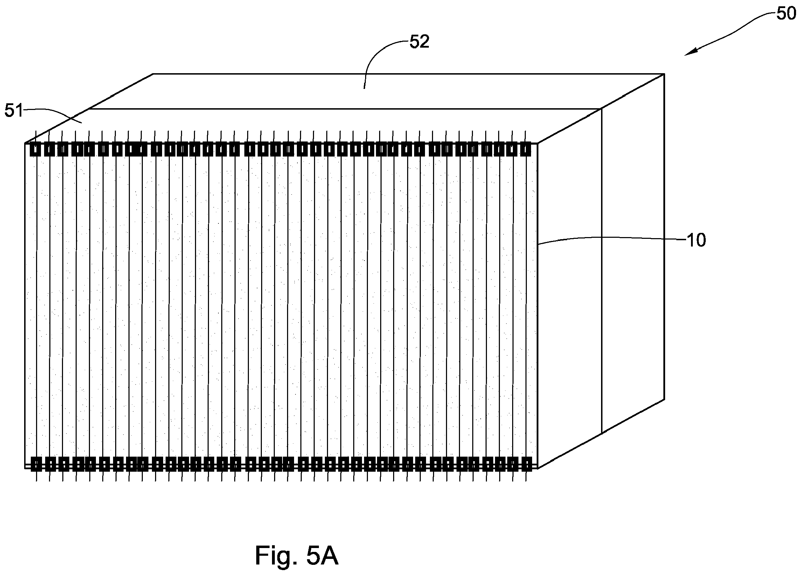

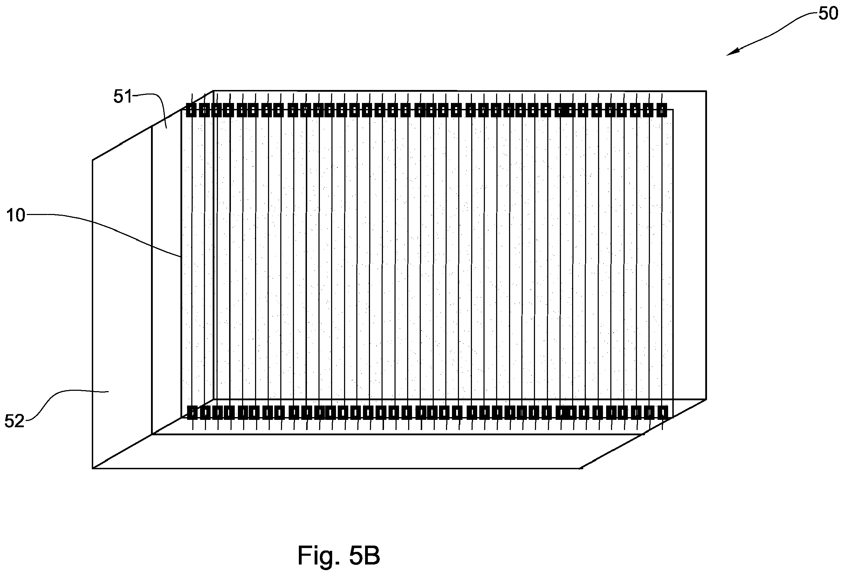

Referring to **Figs. 5A** and **5B** the sensing array **10** can be mounted on a target panel **50** which can be mounted to the target **3.**

According to one embodiment, the target panel **50** also includes an anti-ricochet layer **51** configured to absorb debris in order to protect the sensing array **10.** The anti-ricochet layer can be positioned between the sensing array **10** and the target **3,** to function as a backing layer configured for absorbing debris of the threat ricocheting from the target **3** during the impact, as seen in **Fig. 5A****.**

According to another embodiment, there are provided two anti-ricochet layers positioned on each side of the sensing array **10,** so that the sensing array **10** is sandwiched between the two layers, functioning as a front, protecting layer **51b** and a backing layer **51a** as seen in **Fig. 5B****,** configured for, respectively, absorbing debris from external objects not related to the threat such as rocks, as well as debris ricocheting from the target. This provision can prevent false readings by the sensing array **10,** and preserve portions of the sensing array **10** which were not damaged, for re-use in another event of impact.

The anti-ricochet layer can for example be made from a material selected from epoxy, thermo-plastic, thermal set plastic, ceramic, silicon, or polymers, and Kevlar.

The target panel **50** can further include an armor plate **52** configured to protect the target **3** from the threat **2.** In this case, the anti-ricochet layer **51** should be disposed at least between the armor plate **52** and the sensing array **10** to absorb debris ricocheting from the armor plate **52.**

When desired, the target panel **50** can further include the measuring system **20** mounted together with the sensing array **10,** or on a side of the armor plate **52** opposite to the sensing array **10,** so as to be protected by the armor plate **52** from the incoming threat and other debris as described.

In other examples of the presently disclosed subject matter one target panel, such as target panel 50, can include a plurality of sensing arrays **10,** each of which operatively connected to a measuring system **20** which can be also mounted on the target panel **50** as described, optionally, in a redundancy facilitating arrangement. In such arrangement, each pair of sensing array **10** and measuring system **20** operates individually to sense events of impact, such that even when one pair fails due to malfunction or an impact thereon, another can still function and constitute as backup therefor. According to a particular example, the processing system **30** can receive state signals from multiple measuring systems **20** and compare them to obtain a unified time-sequence.

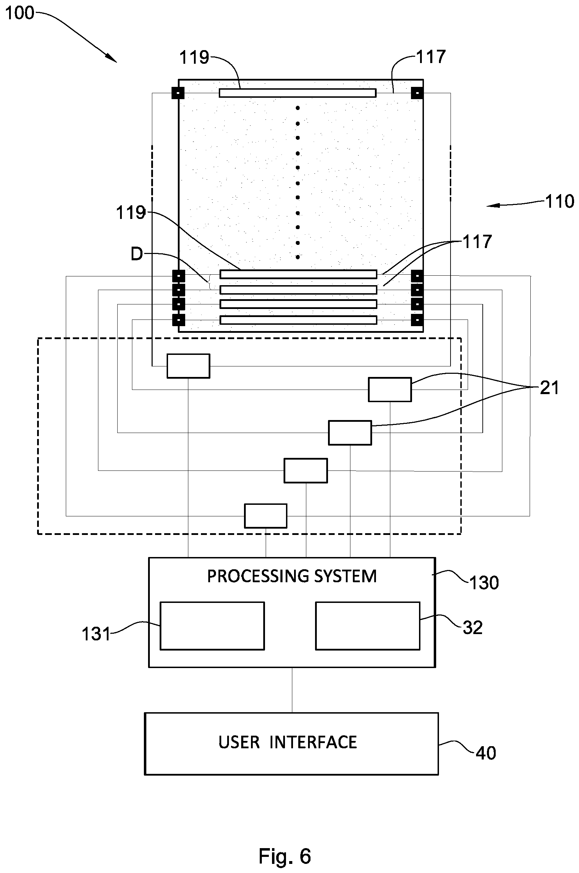

Referring to **Fig. 6****,** a schematic view of an impact detection system **100** is illustrated, in accordance with another embodiment of the present disclosure. The impact detection system **100** is configured to detect, in real-time, incoming threats impacting the target (**3** in **Fig. 2**).

The impact detection system **100** includes a sensing array **110,** a measuring system **120,** a processing system **130,** and the user interface **40.** The sensing array **110** includes a plurality of electrically conductive wires **117** arranged in parallel on or within a nonconductive substrate **113,** with a predetermined distance **D** therebetween.

According to this embodiment, each of the conductive wires **117** includes a piezo-electric component **119** configured to produce an electric pulse upon impact of the threat **2** thereon and to transmit this electrical pulse to the corresponding electrical current sensor **21** of a measuring system **120.**

It should be appreciated that the sensing array **110** can be adapted to certain types of threats, for example by adapting the distance **D** to be smaller than a caliber of the smallest expected threat indicated by a user as most relevant to the area of operation of the target. The distance **D** can be adapted such that in every event of impact at least two piezo-electric components **119** encounter an impact and are thus damaged or be completely destroyed.

For example, when the relevant threat is a 0.5 inch (12.7mm) caliber projectile, the piezo-electric components **119** should be disposed at distances **D** from each other smaller than 0.5 inch.

The measuring system **120** differs from the measuring system **20** by the fact that it does not include an electrical power source, since the piezo-electric components **119** can produce electrical voltage pulses when encountering an impact. Each of the electrical current sensors **21** is coupled to both ends of the corresponding conductive wire **117,** thereby forming an electrically conductive path, and can measure electrical current passing across the respective conductive wire **117.** The results of the measurement are transmitted to a processor **131** of a processing system **130,** in the form of a state signal, similar to the system **100,** *mutatis mutandis.*

In this case, each state signal indicates a zero current, until a respective electrical current sensor **21** captures an electric pulse produced by the corresponding piezo-electric component **119,** that indicates that the corresponding piezo-electric component **119** has encountered an impact.

In operation, the electrical pulse captured by the corresponding electrical current sensor **21** is transmitted to the processor **131** of the processing system **130.** The processor **131** is configured to receive the state signals from all the electrical current sensors **21,** and identify these electric pulses for each state signal. When the processor **131** identifies a first pulse, i.e., a first change, in a state signal, indicating that a piezo-electric component **119** has encountered an impact, the processor **131** interprets it as an initiation of an event of impact, and starts to count time.

If, within a predetermined timeframe, the processor **131** identifies pulses in other state signals, indicating that further piezo-electric components **119** have encountered an impact, the processor **131** generates a data signal including a time-sequence of the corresponding pulses, similarly to the processor **31.** This data signal, including the time-sequence, can be processed similarly to the processing of the system **100** to determine the desired characteristics of the event of impact.

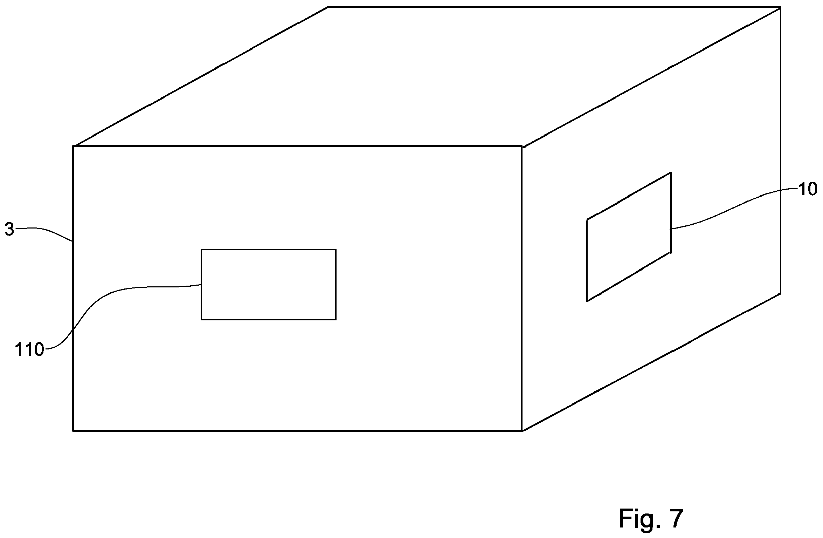

Referring to **Fig. 7****,** a schematic perspective view of the target **3** equipped with a plurality of sensing arrays (e.g. such as the array **10** in **Fig. 3** and/or **110** in **Fig. 6**) mounted thereon is illustrated, according to another embodiment of the present description. According to this embodiment, one or more sensing arrays can be mounted on one or more sides of the target **3,** thereby facilitating determination of the specific location of the impact of the threat on the target **3.**

According to this embodiment, when the processing system (e.g. such as the system **30** or **130**) identifies a first change in a state signal received from the measuring system **20** and/or **120,** it associates this state signal with a respective sensing array **10, 110.** This allows determining the location of impact on the target **3,** which can be also provided to the user via the user interface **40.**

The system of the present disclosure can further include one or more auxiliary sensors, mountable on a target, which are configured to provide additional data on the event of impact, and/or, be used as back-up sensors for determining the location of impact on the target when the sensing array of the system is not operable, for example, if the sensing array is damaged.

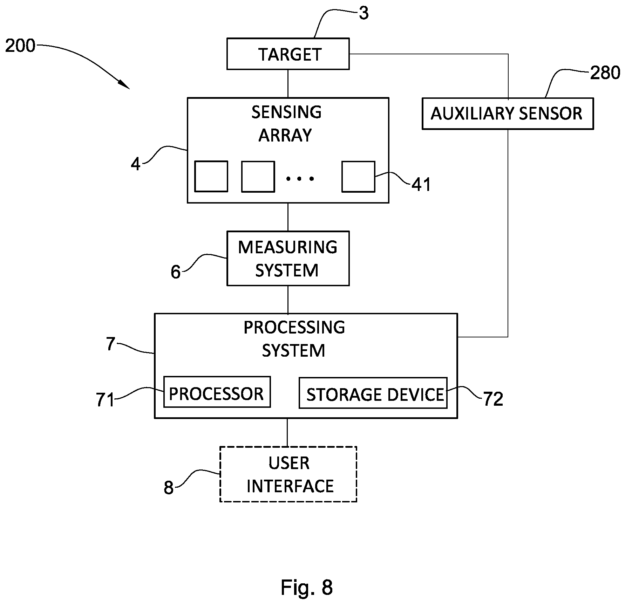

Referring to **Fig. 8****,** a schematic block diagram of an impact detection system **200** is illustrated, according to an embodiment of the presently disclosed subject matter. The impact detection system **200** differs from the system **1** by the fact that it further includes an auxiliary sensor **280.** The auxiliary sensor **280** can be mountable on the target **3,** and configured to measure an auxiliary parameter which can be reflective of an event of impact at the area of the target **3** on which it is mounted. Auxiliary sensor **270** can be also configured to generate auxiliary signals indicative of a value of said parameter and transmit these auxiliary signals to the processor **71.** The processor **71,** in turn, is configured to receive the auxiliary signals, and to identify changes in value of the auxiliary parameter corresponding to the event of impact in order to determine occurrence thereof.

According to this embodiment, the processor **71** can be further configured to associate the auxiliary signals with the corresponding auxiliary sensor **280** to determine the location of the impact with respect to the target **3.**

According to an embodiment, the auxiliary sensor **280** includes an accelerometer **281,** configured to measure an acceleration experienced by the area of the target on which it is mounted. The accelerometer **281** can be further configured to transmit the results of its measurements to the processor **71** in the form of an acceleration signal.

An example of an accelerometer which can be used in the systems **200** is ADXL001 available from ANALOG DEVICES, Inc.

In this case, the processor **71** is further configured to identify changes in the acceleration signal corresponding to an impact experienced by the area of the target on which the accelerometer **281** is mounted, to determine an occurrence of an event of impact.

According to an embodiment, the accelerometer **281** can be mounted on a predetermined area on the target, so that the processor **71** can associate the determination of the event of impact with this predetermined area.

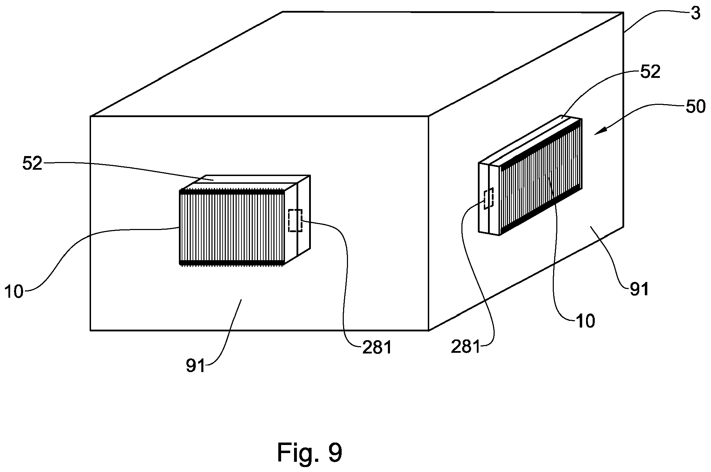

Referring to **Fig. 9****,** a schematic perspective view of the target, on which two illustrative target panels and two illustrative accelerometers are mounted, is illustrated, according to an embodiment of the present disclosure.

According to this embodiment, two accelerometers 271 are provided, which are mounted at predetermined locations on the target **3.** As shown in **Fig. 9****,** the accelerometers **281** are mounted between an external wall **91** of the target **3** covered by the armor plate **52** of the target panel **50.** In this case the armor plate **52** of the target panel **50** can protect the accelerometers **281** from damage by incoming threats. It should be understood that even when the sensing arrays **10** are damaged, the accelerometer can still be functional.

According to this embodiment, the accelerometers **281** can be used as back-up sensors for determining the location of impact on the target **3** when the sensing arrays **10**are not- operable for example due to an occurrence of a previous event of impact thereon.

According to this embodiment, each accelerometer **281** is operatively coupled to the processing system **30** so as to transmit acceleration signals thereto. The processing system **30** in turn, can be configured to associate each acceleration signal with the corresponding accelerometer **281** from which the signal has been transmitted, to determine the location of the impact on the target **3.**

The processor **31** can be further configured to transmit a signal to the user interface **40,** indicative of this location of impact obtained from the accelerometer **281,** when the corresponding sensing array at this predetermined area is non-functional.

As such, those skilled in the art to which the present invention pertains, can appreciate that while the present invention has been described in terms of preferred embodiments, the concept upon which this disclosure is based may readily be utilized as a basis for the designing of other structures, systems and processes for carrying out the several purposes of the present invention.

Also, it is to be understood that the phraseology and terminology employed herein are for the purpose of description and should not be regarded as limiting.

Finally, it should be noted that the words "comprising", "including" and "containing" as used throughout the appended claims are to be interpreted to mean "including but not limited to".

It is important, therefore, that the scope of the invention is not construed as being limited by the illustrative embodiments set forth herein. Other variations are possible within the scope of the present invention as defined in the appended claims. Other combinations and sub-combinations of features, functions, elements and/or properties may be claimed through amendment of the present claims or presentation of new claims in this or a related application. Such amended or new claims, whether they are directed to different combinations or directed to the same combinations, whether different, broader, narrower or equal in scope to the original claims, are also regarded as included within the subject matter of the present description.

## Claims

1. An impact detection system for detecting an event of impact of a threat on a target and determining at least one characteristic of the event, the system comprising:
a sensing array of sensing elements mountable to the target, each sensing element configured to change its state from an intact state to a damaged state upon impact of the threat on the sensing element;
a measuring system operatively coupled to the sensing elements and being sensitive to their state, the measuring system configured to generate state signals, each state signal indicative of the state of the corresponding sensing elements; and
a processing system operatively coupled to the measuring system, configured for:
(i) receiving the state signals corresponding to all the sensing elements;
(ii) identifying changes for each state signal corresponding to the changes of the state of the corresponding sensing element from the intact state to the damaged state;
(iii) upon identifying the changes of the states of at least two sensing elements during the event of impact from the intact state to the damaged state, generating a data signal including a time-sequence of the corresponding changes of the state of said at least two sensing elements; and
(iii) processing the data signal generated thereby to determine said at least one characteristic of the event of the impact.

2. The impact detection system according to Claim 1, wherein the processing system comprises a storage device, configured for storing reference data including at least one reference time-sequence of changes of state of reference sensing elements, the reference time-sequence being related to an impact event having known characteristics.

3. The impact detection system according to Claim 2, wherein the processing system further comprises a processor configured to compare the time-sequence of the corresponding changes of the state of said at least two elements with said at least one reference time-sequence to determine said at least one characteristic of the event of impact.

4. The impact detection system according to Claim 1, Claim 2, or Claim 3, wherein the processing system is further configured to determine a certainty at which said at least one characteristic is determined.

5. The detection system according to any one of the preceding claims, wherein at least one of the following conditions is met:
- said at least one characteristic of the event of impact is selected from at least a type of the threat, and a direction of arrival of the threat with respect to the target;
- the processing system is further configured to associate each state signal with the corresponding sensing element;
- the impact detection system further comprises a user interface operatively coupled to the processing system, and configured to provide said at least one characteristic of the event of the impact to a user;
- the threat is a kinetic proj ectile, optionally, with a caliber within a range extending from 4 mm to 12.7 mm;
- the measuring system includes an electrical source, wherein each sensing element includes an electrically conductive wire configured to be connected to the electrical source of the measuring system, and optionally, a plurality of electrical current sensors corresponding to the sensing elements, the electrical current sensors being configured for measuring an electrical current passing across the conductive wires, and generate the state signal of the corresponding sensing element;
- each sensing element includes a wire made of a piezoelectric material;
- the sensing elements of the array are in a parallel arrangement with a predetermined distance from each other, wherein optionally, the predetermined distance is smaller than a caliber of the threat;
- the impact detection system further comprises at least one additional array of sensing elements mountable onto the target on a different location than the sensing array, optionally, the processing system is further configured to associate the data signal with the corresponding sensing array to determine the location of the impact with respect to the target; and
- The detection system further comprises at least one auxiliary sensor mountable on the target at a predetermined location, configured to sense an auxiliary parameter reflective of an event of impact, and generate auxiliary signals indicative of a value of said parameter, optionally, the processing system is configured to receive the auxiliary signals, and to identify changes in value of the auxiliary parameter corresponding to the event of impact in order to determine occurrence thereof, further optionally, the processing system is configured to associate the auxiliary signals with the corresponding auxiliary sensor to determine the location of the impact with respect to the target, further optionally, the auxiliary sensor includes an accelerometer configured to measure acceleration and generate acceleration signals.

6. The detection system according to any one of the preceding claims, wherein the sensing array is mounted onto a target panel comprising at least one anti-ricochet layer configured to absorb debris scattering as a result of the impact.

7. The detection system according to Claim 6, wherein at least one of the following conditions is met:
- the sensing array is disposed on the anti-ricochet layer;
- the at least one anti-ricochet layer are two or more anti-ricochet layers sandwiching therebetween said sensing array;
- the anti-ricochet layer is made of non-conductive material, optionally, a material selected from epoxy, thermo-plastic, thermal set plastic, ceramic, paper, silicon, or polymers;
- the target panel further comprises an armor plate configured to protect the target from the threat, and wherein the anti-ricochet layer is at least partially disposed between the armor plate and the sensing array;

8. An impact detection method for detecting an event of impact of a threat and determining at least one characteristic of the event of impact, the method comprising:
providing a sensing array of sensing elements on the target, each sensing element configured to change its state from an intact state to a damaged state upon impact of the threat on the sensing element;
sensing the state of each sensing element;
generating state signals, each state signal indicative of the state of the corresponding sensing elements;
identifying changes for each state signal corresponding to the changes of the state of the corresponding sensing element from the intact state to the damaged state;
upon identifying the changes of the states of at least two sensing elements during the event of impact from the intact state to the damaged state, generating a data signal including a time-sequence of the corresponding changes of the state of said at least two sensing elements; and
processing the data signal generated thereby to determine said at least one characteristic of the event of the impact.

9. The impact detection method according to Claim 8, wherein the processing further includes comparing the time-sequence of the corresponding changes of the state of said at least two elements with at least one reference time-sequence to determine said at least one characteristic of the event of impact.

10. The impact detection method according to Claim 8 or Claim 9, wherein the processing further includes determining a certainty at which said at least one characteristic is determined.

11. The impact detection method according to any one of Claims 8, 9 or 10, wherein at least one of the following conditions is met:
- said at least one characteristic of the event of impact is selected from at least a type of the threat, and a direction of arrival of the threat with respect to the target;
- the processing further includes associating each state signal with the corresponding sensing element;
- the impact detection method further comprises a step of providing an additional array of sensing elements mountable onto the target on a different location than the sensing array, optionally, wherein the processing further includes associating the data signal with the corresponding sensing array to determine the location of the impact with respect to the target; and
- the impact detection method further comprises providing at least one auxiliary sensor mountable on the target at a predetermined location, configured to measure a value of an auxiliary parameter which is reflective of an event of impact, optionally, the method further comprises sensing the value of the auxiliary parameter; generating auxiliary signals indicative of the value of the auxiliary parameter; and identifying changes in the value of the auxiliary parameter corresponding to the event of impact to determine an occurrence thereof, further optionally, the processing further includes associating the auxiliary signals with the corresponding auxiliary sensor to determine the location of the impact with respect to the target.

12. A target panel mountable to a target and configured for use with an impact detection system for detecting an event of impact of a threat and determining at least one characteristic of the event of impact; the target panel comprising:
an armor plate configured to protect the target from the threat; and a sensing array of sensing elements mountable on the armor plate, each sensing element configured to change its state from an intact state to a damaged state upon impact of the threat on the sensing element.

13. The target panel according to Claim 12, further comprising a measuring system mounted on the armor plate and operatively coupled to the sensing elements and being sensitive to their state, the measuring system configured to generate state signals, each state signal indicative of the state of the corresponding sensing elements, wherein said state signals are configured to be processed by a processing system for determining the at least one characteristic of the event of impact.

14. The target panel according to Claim 12 or Claim 13, further comprising at least one anti-ricochet layer configured to absorb debris scattering as a result of the impact, optionally, the anti-ricochet layer is at least partially disposed between said sensing array and said armor plate, further optionally, the at least one anti-ricochet layer are two anti-ricochet layers, sandwiching therebetween said sensing array.
